# EUROPÄISCHE PATENTSCHRIFT

(11) **EP 2 810 765 B1**
(45) Veröffentlichungstag und Bekanntmachung des Hinweises auf die Patenterteilung: **25.10.2017**
(21) Anmeldenummer: 14170752.1
(22) Anmeldetag: 02.06.2014
(51) Int. Cl.: B29C 65/16, B23K 26/10, B23K 26/28

(54) **Vorrichtungen zum Verbinden zweier Werkstückteile mittels Laser-Durchstrahlschweißen**
Devices for the connection of two workpieces using laser transmission welding
Dispositifs destinés à relier deux pièces par soudage au laser par transmission

(30) Priorität: 06.06.2013 DE 102013105881
(43) Veröffentlichungstag der Anmeldung: 10.12.2014
(73) Patentinhaber: JENOPTIK Automatisierungstechnik GmbH, 07745 Jena (DE)
(72) Erfinder: Steiner, Christoph, 07743 Jena (DE); Wollmann, Werner, 07747 Jena (DE)
(74) Vertreter: Schaller, Renate

(56) Entgegenhaltungen:
- EP-A1- 1 306 196
- EP-A1- 2 322 311
- EP-A2- 1 186 370
- DE-A1-102011 055 203

## Beschreibung

Die Erfindung betrifft eine Vorrichtung zum Verbinden zweier Werkstückteile mittels Laser-Durchstrahlschweißen, wie sie gattungsgemäß aus der DE 10 2011 055 203 A1 bekannt ist.

Beim Laser-Durchstrahlschweißen ist ein erstes Werkstückteil für die Laserstrahlung transmittierend und ein zweites Werkstückteil für die Laserstrahlung absorbierend. Die beiden Werkstückteile werden übereinander gelegt, wobei das transmittierende Werkstückteil der Laserstrahlquelle zugewandt ist. Die Laserstrahlung durchdringt das erste Werkstückteil, trifft auf die Oberflächen des zweiten Werkstückteils, wird in einem an die Oberfläche angrenzenden Bereich absorbiert und in Wärmeenergie umgewandelt. Der mit der Laserstrahlung beaufschlagte Bereich des zweiten Werkstückteils schmilzt oberflächlich auf, wobei es durch Wärmeleitung auch zum Aufschmelzen des angrenzenden Bereichs des ersten Werkstückteils und damit zu einer stoffschlüssigen Verbindung beider Werkstückteile zu einem Werkstück kommt.

Damit es zur Ausbildung der Schweißnaht kommen kann, werden die zwei miteinander zu verbindenden Werkstückteile so übereinander gelegt, dass sich diese entlang wenigstens einer Fügefläche unmittelbar berühren. Nur die unmittelbare Berührung ermöglicht die Wärmeleitung zwischen den Werkstückteilen. Ein durch Abstand entstehender Luftspalt würde die Wärmeleitung und damit die Ausbildung der Schweißnaht verhindern.

Zum Herstellen der unmittelbaren Berührung an der Fügefläche werden in der Regel spezielle, auf die Werkstückteile angepasste Vorrichtungen verwendet, die eine Anpresskraft erzeugen, mit der die Werkstückteile aneinander gepresst werden können. Die Vorrichtungen sind dabei so gestaltet, dass ein Teil der Fügefläche für die Laserstrahlung zugänglich bleibt, sodass diese ungehindert auf die Werkstückteile auftreffen kann.

Da es sich bei den meisten Werkstückteilen um mehr oder weniger elastische Kunststoffteile handelt, besitzen eine Vielzahl dieser Vorrichtungen Mittel, mit denen eventuelle Verformungen und Maßtoleranzen durch das Einbringen der Anpresskraft ausgeglichen werden können.

Eine solche Vorrichtung ist in der Offenlegungsschrift DE 199 24 469 A1 offenbart. Die beiden am Umfang zu schweißenden Werkstückteile werden an deren flanschförmigen Fügeflächen zwischen zwei ringförmigen Andruckelementen aufgenommen. Die Werkstückteile werden mit den flanschförmigen Fügeflächen auf einem ersten Andruckelement aufgelegt. Dieses Andruckelement wird als Gegenlager zur Aufnahme der Anpresskraft verwendet. Von der Gegenseite wird mit einem zweiten, außerhalb der späteren Schweißnaht angreifenden Andruckelement die Anpresskraft in die Fügeflächen eingeleitet. Die Auflageflächen, mit denen die Andruckelemente auf den Werkstückteilen aufliegen, sind druckelastisch und nachgiebig gestaltet, sodass beim Anpressen eventuell vorhandene Toleranzen der Werkstückteile, auch punktuell differenziert, ausgeglichen werden können. Das zweite Andruckelement ist so dimensioniert, dass es einen Teil des Randbereichs der Werkstückteile für den Laserstrahl unverdeckt lässt. Aufgrund der ringförmigen Gestaltung, zumindest von einem der Andruckelemente, kann die Schweißnaht ohne Unterbrechung im Randbereich des Werkstücks eingebracht werden. Die einseitig der Schweißnaht eingebrachte Anpresskraft kann sich jedoch nachteilig auf das Schweißergebnis auswirken. Da sich die Werkstückteile beim Schweißen erwärmen, können sie durch die einseitig wirkende Anpresskraft verformt werden, wodurch nach der Abkühlung Spannungen im Werkstück entstehen können, die wiederum zu Deformationen führen können. Außerdem ist an den Fügeflächen stets ein ausreichend großer Randbereich erforderlich, der das Angreifen des zweiten Andruckelements außerhalb der Schweißnaht ermöglicht.

Bei einer in der Offenlegungsschrift DE 10 2007 042 739 A1 offenbarten Vorrichtung werden diese Nachteile beseitigt, indem die vom zweiten Andruckelement eingebrachten Anpresskräfte zu beiden Seiten der Schweißnaht verteilt werden. Dazu ist das Andruckelement zweiteilig aufgebaut. Ein innerhalb der Schweißnaht angreifender Innenteil ist über mehrere schmale Stege mit einem außerhalb der Schweißnaht angreifenden Außenteil verbunden. Mit den schmalen Stegen wird die Schweißnaht überbrückt. Eine geringfügige Abschattung des Laserstrahls durch die Stege wird in Kauf genommen.

Es werden keine Maßnahmen beschrieben, die dem Ausgleich von möglichen Toleranzen der Werkstückteile dienen. Es wird erläutert, dass die Form der Auflagefläche des Innenteils an die Form der Werkstückteile und der Schweißnaht angepasst ist, um die Anpresskraft sauber zu verteilen. Bei sehr kleinen Werkstückteilen ist eine solche Anpassung möglicherweise noch sinnvoll. Für größere und komplexer geformte Werkstückteile entsteht schnell ein sehr hoher Fertigungsaufwand.

Mittels einer in der Offenlegungsschrift EP 1 306 196 A1 beschriebenen Haltevorrichtung werden zwei Werkstückteile mittels eines geführten Laserstrahls im Randbereich verschweißt. Die Werkstückteile werden dazu zwischen einem Anpressblock und einem Gegenlager aufgenommen. Mit dem Anpressblock werden die Werkstückteile im Bereich der Schweißnaht aneinander gepresst. Der Anpressblock ist für den Laserstrahl transparent und liegt mit einer flächigen und entsprechend der Oberflächenform des anliegenden Werkstückteils angepassten Kontaktfläche auf dem Werkstückteil auf. Zum Ausgleich möglicher Toleranzen, kann das Gegenlager aus einzeln gefederten Segmenten aufgebaut sein. Der Anpressblock kann verschiedenartig aufgebaut sein. Es werden transparente Vollmaterialien, transparente und elastische Folien, die über die Werkstückteile gespannt werden oder starre, entsprechend ausgeformte transparente Folien beschrieben. Die Verwendung von Vollmaterial erscheint, insbesondere bei Werkstückteilen, die größer als die hier erwähnten Kfz-Scheinwerfer sind, als eine sehr aufwändig herzustellende Lösung. Die Folienlösungen funktionieren nur, wenn das anliegende Werkstückteil eine geschlossene Oberfläche aufweist, die frei von beispielsweise senkrecht stehenden Wandstrukturen ist.

Den Lösungen der vorgenannten Schriften ist gemeinsam, dass die Schweißung umlaufend und im Randbereich der Werkstückteile erfolgt. Die Schweißnaht ist stets linienförmig ausgebildet.

Sollen Werkstückteile neben dem Randbereich auch über weitere Flächen verschweißt werden, sind eine Vielzahl von Schweißnähten erforderlich, die vorteilhaft eine vergleichsweise große Schweißnahtbreite aufweisen.

Bei einer Vorrichtung zur Erzeugung einer Laserschweißverbindung aus der Offenlegungsschrift EP 1 186 370 A2 werden die Endflächen von Metallstiften mit einer flexiblen Metallfolie verschweißt. Zum flächigen Anlegen wird die Metallfolie mittels gefederter Niederhalter spaltfrei an die Endflächen angedrückt. Die Niederhalter sind axial zu den Metallstiften ausgerichtete Hohlzylinder, durch die das Laserlicht auf die Metallfolie eingekoppelt wird. Da es sich bei den Metallstiften um Kontakte von elektronischen Bauelementen handelt, die auf eine flexible Leiterplatte aufgeschweißt werden, sind die zu schweißenden kreisscheibenförmigen Flächen nur sehr klein und nicht vergleichbar mit den Anforderungen beim Kunststoffschweißen.

Eine in der Offenlegungsschrift EP 2 322 311 A1 offenbarte Vorrichtung zum Punktschweißen mit Laserstrahl führt den Laserstrahl durch ein Rohr auf die zu verschweißenden Werkstückteile. Das Rohr setzt senkrecht auf den Werkstückteilen auf und leitet eine bestimmte Andruckkraft ein. Die Rohre können verschiedene, von einer Kreisform abweichende Querschnitte aufweisen, mit denen flächig ausgedehnte Schweißpunkte hergestellt werden können. Bei paralleler Verwendung mehrerer Rohre lassen sich auch Muster aus mehreren Schweißpunkten herstellen, wobei die Schweißpunkte auch unmittelbar neben senkrecht stehenden Wandstrukturen angeordnet sein können. Nachteil ist, dass für jeden Schweißpunkt eine Schweißeinheit erforderlich ist.

Aus der einleitend genannten DE 10 2011 055 203 A1 ist eine Vorrichtung zum Lasertransmissionsschweißen von zwei in x-y-Richtung flächig ausgedehnten Werkstückteilen entlang einer Schweißnaht bekannt, mit einer Laserstrahlquelle, bestehend aus einer Vielzahl von einzeln ansteuerbaren Laserstrahlemittern, die gemeinsam ein Linienarray bilden, welches in x-Richtung ausgerichtet ist, einer Aufnahme für die Werkstückteile, einer Transporteinrichtung zum relativen Transportieren der Laserstrahlquelle zur Aufnahme in y-Richtung und einem der Laserstrahlquelle in Abstrahlrichtung nachgeordneten Homogenisierer. Der Homogenisierer wird durch einen Träger gebildet, in dem Reflexionskanäle ausgebildet sind, deren Kanalquerschnitte und deren Dimensionierungen an den Verlauf und die gewünschte Breite der Schweißnähte angepasst sind. Es sind zwei Ausführungsbeispiele für den Aufbau eines Homogenisierers, bestehend aus einer transparenten Verbindungsplatte z. B. aus Glas, und einem Träger angegeben.

Der Träger kann aus einer massiven Planplatte hergestellt sein, deren Dicke die Länge der Kanallänge bestimmt. Die Kanäle könnten gegebenenfalls durch Fräsen eingebracht sein.

Vorteilhaft soll der Träger aus zwei Elementen gebildet sein, welche, einen Reflexionskanal bildend, einen Zwischenraum miteinander einschließen.

Die Wände des Trägers stehen während des Schweißens unter Druck mit der Oberfläche des transmittierenden Werkstückteils in Verbindung, womit eine Andruckkraft auf die Werkstückteile übertragen wird. Bei in z-Richtung gewölbten Werkstückteilen sind die Wände des Trägers ortsabhängig unterschiedlich lang ausgeführt und die Stirnflächen der Wände können zum Teil auch einen Abstand zur Oberfläche aufweisen, womit sie nicht mit an der Übertragung einer Andruckkraft auf die Werkstückteile beteiligt sind. Über die an den Werkstückteilen anliegenden Stirnflächen des Trägers wird die Andruckkraft auf der Oberfläche der Werkstückteile verteilt.

Nachteilig an der Ausführung des Homogenisierers, der auch als eine Andruckeinheit verstanden werden kann, ist die individuelle Ausführung des Trägers entsprechend der Verläufe der Schweißnähte und dessen starrer Ausführung in Richtung der Andruckkraft.

Es sind keine Maßnahmen beschrieben, die einen Ausgleich von Toleranzen der Werkstückteile ermöglichen. Waren in den zuvor genannten Schriften solche Maßnahmen vorgesehen, dann wurden dazu stets zusätzliche Konstruktionselemente, wie Gummikörper, gefederte Stifte, Hebelarme usw., verwendet.

Aufgabe der Erfindung ist es, eine Vorrichtung zum Verbinden zweier Werkstückteile mittels Laser-Durchstrahlschweißen mit einer möglichst einfach aufgebauten und kosteneffizient herstellbaren Andruckeinheit zu finden, mit der die Werkstückteile bei gleichzeitigem Ausgleich von Werkstücktoleranzen mit einer Vielzahl von Schweißnähten flächig verschweißt werden können.

Diese Aufgabe wird gelöst durch eine Vorrichtung zum Verbinden zweier Werkstückteile mittels Laser-Durchstrahlschweißen über ein vorgegebenes Schweißnahtmuster aus einer Vielzahl von Schweißnähten mit einer Aufnahme, einer Laserstrahlquelle, einer Bewegungseinrichtung, einer Andruckeinheit sowie einer Speicher- und Steuereinheit.

Die Aufnahme ist dazu ausgelegt, zwei in x-y-Richtung flächig ausgedehnte Werkstückteile zueinander in x-, y- und z-Richtung eines kartesischen Koordinatensystems zu positionieren.

Die Aufnahme und die Andruckeinheit sind in z-Richtung relativ aufeinander zustellbar, um eine in z-Richtung orientierte Andruckkraft zu erzeugen, mit der die in die Aufnahme eingelegten Werkstückteile gegen die Andruckeinheit und folglich gegeneinander gedrückt werden. Die Aufnahme weißt hierfür einen mit ihr verbundenen Druckzylinder auf.

Die Laserstrahlquelle überspannt die Vorrichtung in x-Richtung und ist mit ihrer Abstrahlrichtung senkrecht, das heißt in z-Richtung, auf die Aufnahme und damit auf die in dieser positionierte Werkstückteile gerichtet.

Mit der Bewegungseinrichtung können die Laserstrahlquelle und die Aufnahme in y-Richtung relativ zueinander bewegt werden. Die Laserstrahlquelle und die Bewegungseinrichtung werden mittels einer Speicher- und Steuereinheit angesteuert.

Die Andruckeinheit ist der Laserstrahlquelle in Abstrahlrichtung nachgeordnet. In ihr sind mehrere in Abstrahlrichtung durch die Andruckeinheit hindurch verlaufende Kanäle vorgesehen, die sich gegenüberstehende Kanalwände aufweisen. Die Kanalwände ermöglichen es, dass wenigstens ein Teil der auf die Werkstückteile gerichteten Laserstrahlung vor dem Auftreffen auf die Werkstückteile reflektiert wird. Die Kanalwände sind dazu ausgelegt, die Werkstückteile in z-Richtung gegeneinander anzudrücken, weshalb die Form der Andruckeinheit auf der auf dem transluzenten Werkstückteil aufsetzenden Seite der dreidimensionalen Form der Werkstückteile entsprechend ausgeführt ist. Die Kanalwände sind durch eine gitterförmige Anordnung einer Mehrzahl von in x- und y-Richtung orientierten ersten und zweiten Andruckelementen gebildet. Dabei weisen die in y-Richtung orientierten zweiten Andruckelemente integrierte Mittel zum Ausgleich von Toleranzen in z-Richtung auf und sind damit in z-Richtung elastisch, während die in x-Richtung orientierten zweiten Andruckelemente in z-Richtung kürzer als die in y-Richtung orientierten zweiten Andruckelemente sind, sodass sie nicht an das transluzente Werkstückteil angelegt werden, wenn die in y-Richtung orientierten zweiten Andruckelemente zur Anlage kommen. Äquivalent hierzu können die in y-Richtung orientierten zweiten Andruckelemente kürzer sein, wenn die in x-Richtung orientierten zweiten Andruckelemente integrierte Mittel zum Ausgleich von Toleranzen in z-Richtung aufweisen. Die ersten Andruckelemente sind in z-Richtung starr.

Vorteilhaft ist ein in x-y-Richtung ausgedehnter Tragrahmen zur Befestigung der ersten und zweiten Andruckelemente vorhanden.

Die ersten und zweiten Andruckelemente weisen jeweils mehrere Schlitze auf, über die die ersten und zweiten Andruckelemente zu der gitterförmigen Anordnung ineinander gesteckt sind.

Es ist von Vorteil, wenn die zweiten Andruckelemente mit den integrierten Mitteln zum Ausgleich von Toleranzen jeweils einen monolithischen Aufbau aufweisen.

Vorteilhaft ist das Mittel zum Ausgleich von Toleranzen eine in die zweiten Andruckelemente eingebrachte federnde Struktur, die an auf den Werkstückteilen aufsetzenden Kanten der zweiten Andruckelemente angeordnet ist.

Vorzugsweise können die federnden Strukturen einen Aufbau aufweisen, der eine in die zweiten Andruckelemente eingeleitete Andruckkraft gleichmäßig auf eine Vielzahl von Kraftaufnahmepunkten verteilt.

Insbesondere kann die federnde Struktur die Andruckkraft, von einem mittigen Kraftaufnahmepunkt ausgehend, symmetrisch auf eine sich mehrfach kaskadenartig verdoppelnde Anzahl von Kraftaufnahmepunkten verteilen.

Die Umkehrung des Prinzips (eine von den zweiten Andruckelementen abgegebene Andruckkraft über eine Vielzahl von Kraftabgabepunkten verteilen) ist ebenfalls denkbar und möglich.

Zweckmäßig ist am Tragrahmen eine Justiereinrichtung zur Befestigung und Justage der zweiten Andruckelemente gegenüber den ersten Andruckelementen angebracht. Es ist vorteilhaft, wenn an den ersten oder zweiten Andruckelementen befestigt weitere Andruckelemente zum Aufnehmen der Anruckkraft vorgesehen sind.

In einer möglichen Ausgestaltung weist die Aufnahme eine druckelastisch nachgiebige Auflagefläche zum Auflegen des absorbierenden Werkstückteils auf.

In einer alternativen Bauform weisen die Andruckelemente eine den Tragrahmen ersetzende und die Ausbildung einer selbsttragenden Struktur gestattende Dimensionierung auf.

Nachfolgend soll die Erfindung anhand von Ausführungsbeispielen näher erläutert werden. In den zugehörigen Zeichnungen zeigen:
- Fig. 1:: den prinzipiellen Aufbau der Vorrichtung,
- Fig. 2a:: eine Prinzipdarstellung eines zweiten Andruckkörpers mit integrierten Mitteln zum Ausgleich von Toleranzen der Werkstückteile,
- Fig. 2b:: das Prinzip der gleichmäßigen Verteilung der Andruckkraft über die Werkstückteile,
- Fig. 2c:: eine Prinzipdarstellung einer Andruckeinheit in einer Schnittdarstellung,
- Fig. 3:: ein Beispiel für ein speziell auf die Werkstückteile angepasstes Schweißnahtmuster und
- Fig. 4:: eine spezielle Ausführung einer Andruckeinheit.

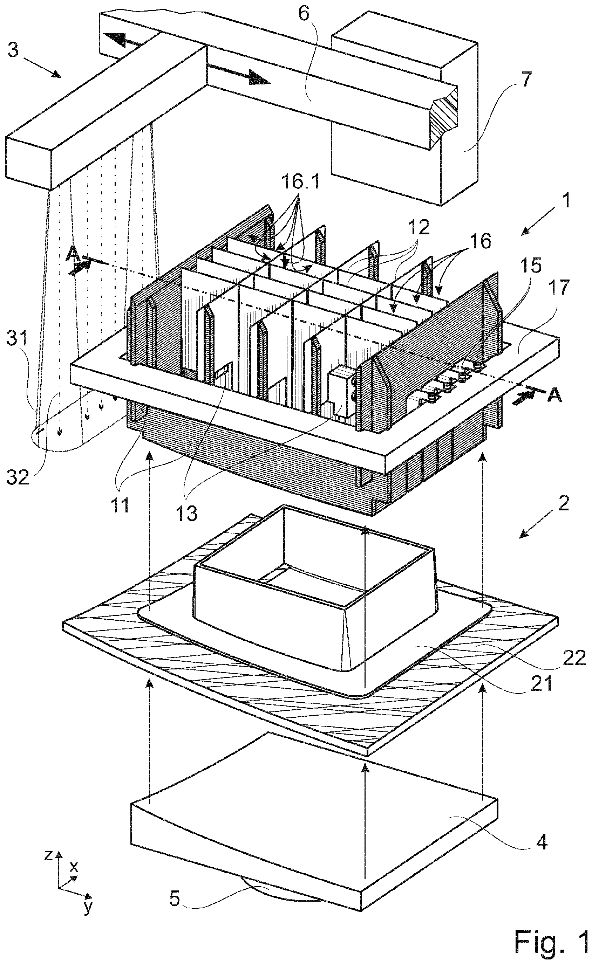

Gemäß eines ersten, in Fig. 1 dargestellten Ausführungsbeispiels weist die Vorrichtung zum Laser-Durchstrahlschweißen grundsätzlich eine Aufnahme 4 mit einem Druckzylinder 5, eine Andruckeinheit 1, eine Bewegungseinrichtung 6 mit einer Laserstrahlquelle 3 und eine Speicher- und Steuereinheit 7 auf.

In die Aufnahme 4 wird ein absorbierendes Werkstückteil 22 und ein transluzentes Werkstückteil 21 eingelegt, die zu einem Werkstück 2 verschweißt werden. Das absorbierende Werkstückteil 22 ist für eine von der Laserstrahlquelle 3 ausgehende Laserstrahlung 31 absorbierend und das transluzente Werkstückteil 21 ist für die Laserstrahlung 31 transmittierend. In der Aufnahme 4 wird zuerst das absorbierende Werkstückteil 22 und anschließend das transluzente Werkstückteil 21 eingelegt, sodass Letzteres der Laserstrahlquelle 3 zugewandt ist.

Durch das Einlegen in die Aufnahme 4 ist das Werkstück 2 in x-, y- und z-Richtung eines kartesischen Koordinatensystems positioniert.

Die Laserstrahlquelle 3 ist der Aufnahme 4 in z-Richtung gegenüberliegend angeordnet. Die von der Laserstrahlquelle 3 ausgehende Laserstrahlung 31 ist in einer ebenfalls in z-Richtung orientierten Abstrahlrichtung 32 vorteilhaft senkrecht auf das Werkstück 2 gerichtet. Die Laserstrahlquelle 3 ist linienförmig aufgebaut und strahlt die Laserstrahlung 31 in Form eines in x-Richtung ausgedehnten Laserstrahlvorhangs ab. Dazu besteht die Laserstrahlquelle 3 vorteilhaft aus mehreren in x-Richtung nebeneinander angeordneten Laserstrahlemittern.

Die Laserstrahlquelle 3 ist relativ zur Aufnahme 4 beweglich an der in y-Richtung positionierbaren Bewegungseinrichtung 6 angeordnet. Die Ausdehnung der linienförmigen Laserstrahlquelle 3 in x-Richtung und ein Bewegungsbereich der Bewegungseinrichtung 6 in y-Richtung weisen mindestens eine solche Größe auf, dass das Werkstück 2 vollständig mit der Laserstrahlung 31 erfassbar ist.

Zur Ansteuerung der Laserstrahlquelle 3 und der Bewegungseinrichtung 6 weist die Vorrichtung die Speicher- und Steuereinheit 7 auf.

Bei den mit der Vorrichtung zu verschweißenden Werkstückteilen 21, 22 handelt es sich vorrangig um flächig in x- und y-Richtung ausgedehnte Werkstückteile 21, 22, die auch dreidimensionale Ausformungen in z-Richtung aufweisen können und die in der Regel großflächig verschweißt werden. Zum Verbinden mittels Laser-Durchstrahlschweißen ist es erforderlich, dass die beiden Werkstückteile 21, 22 an zu verschweißenden Oberflächen einen Kontaktbereich ausbilden, in dem sich die beiden Werkstückteile 21, 22 direkt berühren. Dieser direkte Kontakt wird hergestellt, indem die Werkstückteile 21, 22 gleichmäßig über die Fläche des Kontaktbereichs verteilt gegeneinander angedrückt werden.

Das Einbringen einer dazu erforderlichen Andruckkraft F erfolgt mit dem Druckzylinder 5, durch den die Aufnahme 4 mit den darin eingelegten Werkstückteilen 21, 22 in z-Richtung gegen die in der Vorrichtung befestigte Andruckeinheit 1 angedrückt wird.

Die Andruckeinheit 1 ist der Laserstrahlquelle 3 in Abstrahlrichtung 32 nachgeordnet, und nimmt die Andruckkraft F auf, indem sie auf das transluzente Werkstückteil 21 aufsetzt.

Um die gleichmäßige Verteilung der Andruckkraft F auf dem Werkstück 2 zu gewährleisten, ist stets eine spezielle, dreidimensionale Anpassung der Aufnahme 4 und der Andruckeinheit 1 erforderlich. Deshalb ist eine kosteneffizient herzustellende Andruckeinheit 1 mit einem einfachen Aufbau von wesentlicher Bedeutung für die Vorrichtung zum Laser-Durchstrahlschweißen.

Grundsätzlich weist die Andruckeinheit 1 eine gitterförmige Anordnung von in x- und y- Richtung orientierten planplattenförmigen Andruckelementen auf. Dabei gibt es wenigstens ein in x- und ein in y-Richtung orientiert angeordnetes erstes Andruckelement 11, welche in z-Richtung starr sind und bei aufgesetzter Andruckeinheit 1 auf dem Werkstück 2 in z-Richtung verlaufen. Eine Vielzahl von zweiten Andruckelementen 12 unterscheiden sich je nach ihrer Orientierung in elastische zweite Andruckelemente 12 und verkürzte zweite Andruckelemente 12.

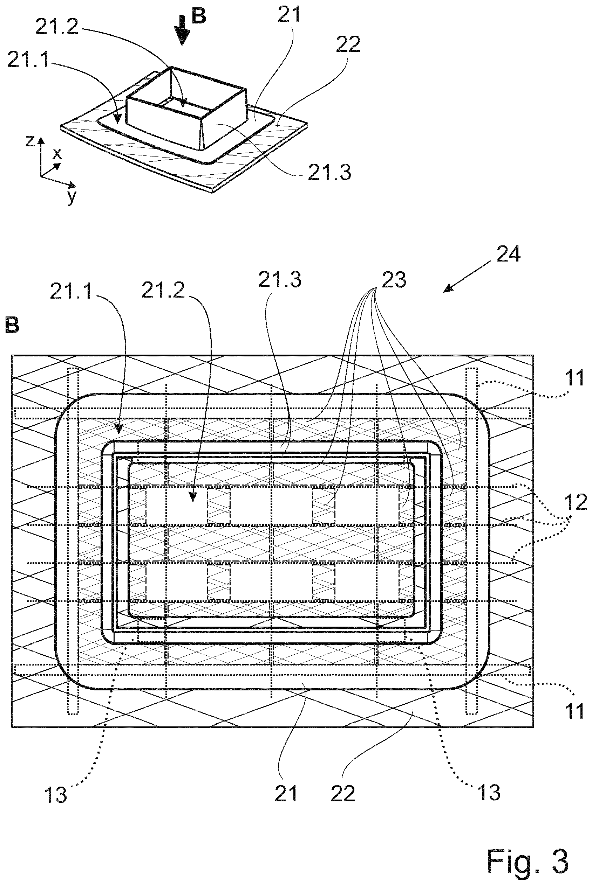

Wie in Fig. 1 dargestellt, weist das absorbierende Werkstückteil 22 eine in z-Richtung gewölbte Oberfläche auf. Die Werkstückteile 21, 22 werden, wie am Beispiel in Fig. 3 gezeigt, fast über den gesamten Bereich der Oberfläche des transluzenten Werkstückteils 21 verschweißt. Dementsprechend erstreckt sich der Kontaktbereich ebenfalls über die gesamte Oberfläche des transluzenten Werkstückteils 21. Um in diesem Bereich ein flächiges Gegenlager für die Aufnahme 4 zu bilden, entspricht die Form der Andruckeinheit 1, zumindest an der im Kontaktbereich auf dem transluzenten Werkstückteil 21 aufsetzenden Seite, genau der dreidimensionalen Form der Werkstückteile 21, 22. Gleiches trifft für die Aufnahme 4 zu, welche die Andruckkraft F flächig in die Werkstückteile 21, 22 einleitet.

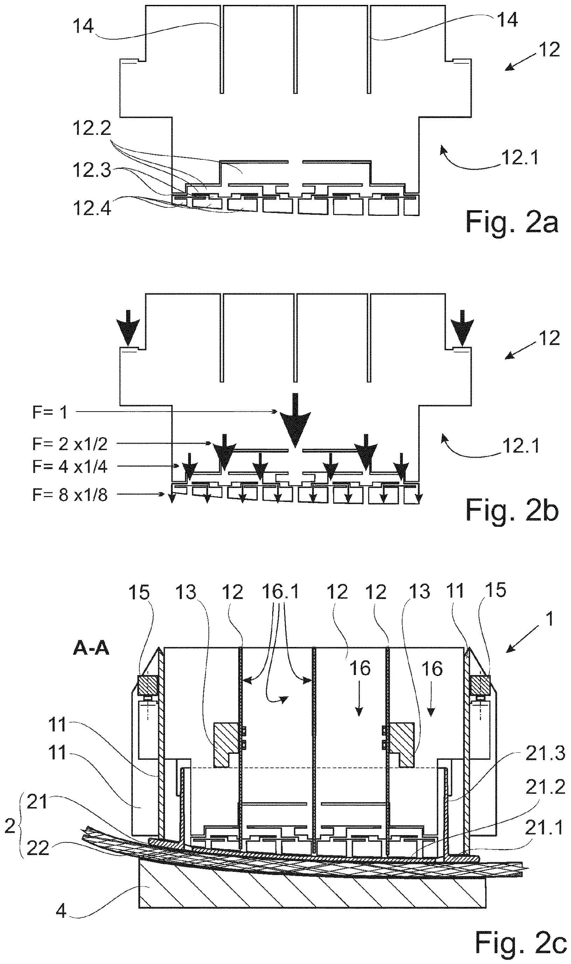

Das in diesem Ausführungsbeispiel beschriebene Werkstück 2 weist den in Fig. 1 gezeigten Aufbau, mit einer in z-Richtung orientierten Wandstruktur 21.3 auf. Wie in Fig. 2c in einer Schnittdarstellung der Vorrichtung gezeigt, verfügt das transluzente Werkstückteil 21 über einen inneren Kontaktbereich 21.2 und einen äußeren Kontaktbereich 21.1. Der innere Kontaktbereich 21.2 ist eine in x-y-Richtung ausgedehnte Fläche. Der äußere Kontaktbereich 21.1 ist ebenfalls eine in x-y-Richtung ausgedehnte, rahmenförmige Fläche, die den inneren Kontaktbereich 21.2 vollständig umgibt und welche die in z-Richtung orientierte Wandstruktur 21.3 ausbildet.

Die Andruckeinheit 1 ist ein dreidimensionaler Aufbau aus einer Mehrzahl der ersten Andruckelemente 11 und der zweiten Andruckelemente 12. Dazu sind die Andruckelemente 11, 12 in z-Richtung senkrecht stehend, in x-y-Richtung rechtwinklig gekreuzt ineinander gesteckt, sodass sie entweder in x- oder in y-Richtung orientiert sind und eine gitterförmige Anordnung bilden. Um die Andruckelemente 11, 12 ineinander stecken zu können, bestehen diese vorzugsweise aus ebenen Blechen mit einer vorteilhaften Blechdicke im Bereich von 1 - 3 mm.

Zum Ineinanderstecken sind die Andruckelemente 11, 12 an entsprechenden Stellen mit in z-Richtung verlaufenden Schlitzen 14 versehen. Die Schlitze 14 reichen etwa bis zur Mitte der Andruckelemente 11, 12. Die Öffnungen der Schlitze 14 sind an den in x-Richtung orientierten Andruckelementen 11, 12 gegenüberliegend zu den in y-Richtung orientierten Andruckelementen 11, 12 angeordnet. D. h., dass beispielsweise ein in y-Richtung orientiertes Andruckelement 11, 12 auf der zur Laserstrahlquelle 3 gerichteten Seite und ein in x-Richtung orientiertes Andruckelement 11, 12 auf der zur Aufnahme 4 gerichteten Seite geschlitzt ist, sodass beim rechtwinklig gekreuzten Ineinanderstecken das in y-Richtung orientierte Blech mit der zur Aufnahme 4 weisenden ungeschlitzten Seite im Schlitz 14 des in x-Richtung verlaufenden Blechs aufgenommen wird und umgekehrt.

Die ersten Andruckelemente 11 sind in z-Richtung steif und werden zum Andrücken des äußeren Kontaktbereichs 21.1 außerhalb der Wandstruktur 21.3 verwendet. Entsprechend der rahmenförmigen Fläche des äußeren Kontaktbereichs 21.1 wird mit den ersten Andruckelementen 11 ebenfalls eine rahmenförmige Anordnung gebildet, welche die zweiten Andruckelemente 12 umgibt. Die zur Aufnahme 4 weisenden Kanten der ersten Andruckelemente 11 sind entsprechend der Oberfläche des Werkstücks 2 ausgeformt.

Die zweiten Andruckelemente 12 werden zum Andrücken des inneren Kontaktbereichs 21.2 innerhalb der Wandstruktur 21.3 verwendet, wobei das Andrücken ausschließlich mit elastischen zweiten Andruckelementen 12 erfolgt, die in y-Richtung orientiert sind und Mittel zum Ausgleich von Toleranzen der Werkstückteile 21, 22 aufweisen, womit sie in z-Richtung elastisch sind. Die in x-Richtung orientierten zweiten Andruckelemente 12 sind in z-Richtung kürzer ausgeführt als die in y-Richtung orientierten zweiten Andruckelemente 12.

An den elastischen zweiten Andruckelementen 12 ist eine federnde Struktur 12.2 an den zur Aufnahme 4 weisenden Kanten eingebracht. Die federnde Struktur 12.2 ist in das Blech integriert, sodass diese zweiten Andruckelemente 12 trotz der federnden Struktur 12.2 einen monolithischen Aufbau aufweisen. Sie wird erzeugt, indem das Blech mit Einschnitten 12.3 versehen wird. In Fig. 2a ist ein beispielhafter Verlauf der Einschnitte 12.3 an einem, zu dem in Fig. 1 gezeigten Werkstück 2 passenden, zweiten Andruckelement 12 gezeigt. Die federnde Struktur 12.2 endet an der zur Aufnahme 4 gerichteten Kante in Form mehrerer vereinzelter Andruckstücke 12.4, die in gleichmäßigen Abständen über die Länge des zweiten, in y-Richtung orientierten Andruckelements 12 verteilt angeordnet sind und beim Andrücken mit einer linienförmigen Auflagefläche auf dem transluzenten Werkstückteil 21 aufsetzen.

Die federnde Struktur 12.2 ist so aufgebaut, dass sie die auf das zweite Andruckelement 12 wirkende Andruckkraft F, ausgehend von einem mittigen Kraftaufnahmepunkt, in mehreren symmetrischen Kaskaden gleichmäßig auf die Andruckstücke 12.4 verteilt. Das Prinzip der Aufteilung wird in Fig. 2b durch symbolische Pfeile in entsprechenden Größen verdeutlicht. Die federnde Struktur 12.2 des dargestellten zweiten Andruckelements 12 weist drei Kaskaden auf, wobei in jeder Kaskade eine Verdopplung der Kraftaufnahmepunkte erfolgt. Die vom mittigen Kraftaufnahmepunkt aufgenommene Andruckkraft F wird dadurch gleichmäßig auf die acht Andruckstücke 12.4 verteilt. Die Andruckstücke 12.4 selbst sind nochmals federnd aufgenommen, sodass die Andruckkraft F auch gleichmäßig über die linienförmige Auflagefläche der einzelnen Andruckstücke 12.4 verteilt aufgenommen wird. Durch die federnde Struktur 12.2 werden punktuelle Belastungen des Werkstücks 2 vermieden, die beim Schweißen zur Ausbildung von sichtbaren Eindrücken in den Werkstückteilen 21, 22 führen könnten.

Wie in Fig. 2a gezeigt, weisen alle zweiten Andruckelemente 12 seitliche Ausnehmungen 12.1 auf, die zur Aussparung der Wandstruktur 21.3 vorgesehen sind.

Die in x-Richtung orientierten zweiten Andruckelemente 12 setzen nicht auf dem transluzenten Werkstückteil 21 auf. Sie werden im gitterförmigen Aufbau ausschließlich zur Stabilisierung der in y-Richtung orientierten zweiten Andruckelemente 12 verwendet.

Die gitterförmige Anordnung der Andruckelemente 11, 12 wird von einem in x-y-Richtung ausgedehnten Tragrahmen 17 mit rechteckigem Querschnitt umgeben. Am Tragrahmen 17 sind die ersten und zweiten Andruckelemente 11 und 12 befestigt. Der Tragrahmen 17 bildet zusammen mit den Andruckelementen 11, 12 die Andruckeinheit 1, gegen welche die Werkstückteile 21, 22 mit der Aufnahme 4 angedrückt werden. Die Andruckeinheit 1 wird am Tragrahmen 17 in der Vorrichtung aufgenommen.

Um die in y-Richtung orientierten zweiten Andruckelemente 12 mit den federnden Strukturen 12.2 in der Andruckeinheit 1 gegeneinander und gegenüber den ersten Andruckelementen 11 auszurichten, sind die seitlichen Enden dieser zweiten Andruckelemente 12 bis in den Bereich des Tragrahmens 17 geführt. Am Tragrahmen 17 ist eine Justiereinrichtung 15 vorhanden, an der die seitlichen Enden dieser zweiten Andruckelemente 12 mittels einer lösbaren Verbindung befestigt sind. An der Justiereinrichtung 15 können diese zweiten Andruckelemente 12 translatorisch in z-Richtung und rotatorisch um die x-Achse justiert werden. Mit der Justiereinrichtung 15 ist es auch möglich, eine Vorspannung zwischen dem äußeren und inneren Kontaktbereich 21.1 und 21.2 einzustellen, indem eine eingestellte Höhendifferenz zum nacheinander folgenden Aufsetzen der ersten oder zweiten Andruckelemente 11 ,12 beim Andrücken führt.

Wie in der Fig. 2c außerdem dargestellt, wird zum Andrücken des äußeren Kontaktbereichs 21.1 ein weiteres Andruckelement 13 verwendet. Hierbei handelt es sich um vier (in Fig. 2c sind nur zwei sichtbar) nahezu quaderförmige weitere Andruckelemente 13, die an den in x-Richtung orientierten zweiten Andruckelementen 12 befestigt sind und die auf den Wandstrukturen 21.3 des äußeren Kontaktbereichs 21.1 aufsetzen.

Entsprechend der Anzahl der gitterförmig angeordneten zweiten Andruckelemente 12 sind in der Andruckeinheit 1 eine Vielzahl von benachbarten, in z-Richtung verlaufenden Kanälen 16 ausgebildet, die sich parallel gegenüberstehende Kanalwände 16.1 aufweisen. Durch die rechtwinklig gekreuzte Anordnung der Andruckelemente 11, 12 weisen die Kanäle 16 in x-y-Richtung ebenfalls einen rechteckigen Querschnitt auf.

In z-Richtung durch die Kanäle 16 hindurch geführt ist die Laserstrahlung 31 auf das Werkstück 2 gerichtet. Zum Erzeugen der Laserstrahlung 31 wird vorzugsweise eine Laserstrahlquelle 3 verwendet, welche die Laserstrahlung 31 divergent abgibt. Dazu und zum Laser-Durchstrahlschweißen sind insbesondere Hochleistungsdiodenlaser geeignet.

Aufgrund der ebenen Oberfläche der aus Blechen bestehenden ersten und zweiten Andruckelemente 11 und 12 können die Kanalwände 16.1 für die divergent in die Kanäle 16 eintretende Laserstrahlung 31 reflektierend wirken. Durch die sich vorteilhaft parallel gegenüberstehenden Andruckelemente 11, 12, durch die Höhe der Andruckelemente 11, 12 in z-Richtung und durch den Divergenzwinkel der Laserstrahlung 31 wird wenigstens ein Teil der Laserstrahlung 31 an den Kanalwänden 16.1 reflektiert, bevor sie auf das Werkstück 2 auftrifft. Durch die Reflexionen erfolgt eine Durchmischung der Laserstrahlung 31, sodass die ein ansonsten gausförmiges Intensitätsprofil aufweisende Laserstrahlung 31 vor dem Auftreffen homogenisiert wird. Dadurch lassen sich großflächige Schweißnähte 23 besonders homogen herstellen.

Der von der linienförmigen Laserstrahlquelle 3 ausgehende geschlossene Laserstrahlvorhang erfasst das Werkstück 2 über dessen gesamte Ausdehnung in x-Richtung. Mit der Bewegungseinrichtung 6 wird die Laserstrahlquelle 3 in y-Richtung über das Werkstück 2 bewegt, sodass zumindest die gesamte Fläche des transluzenten Werkstückteils 21 während einer Relativbewegung mit der Laserstrahlung 31 erfasst werden kann.

In Fig. 3 ist ein Beispiel für ein auf das in Fig. 1 gezeigte Werkstück 2 angepasstes Schweißnahtmuster 24 gezeigt. Zu erkennen ist, dass das Schweißnahtmuster 24 fast den gesamten äußeren und inneren Kontaktbereich 21.1 und 21.2 ausfüllt. Unterbrechungen entstehen ausschließlich dort, wo die in z-Richtung orientierten Wandstrukturen 21.3 eine Transmission der Laserstrahlung 31 durch das transluzente Werkstückteil 21 verhindern und wo die Laserstrahlung 31 von den Andruckelementen 11 und 12 abgeschattet wird. Die abschattenden Andruckelemente 11 und 12 sind im Schweißnahtmuster 24 als gepunktete Linien dargestellt. Aufgrund der geringen Blechdicken ist die Abschattung vernachlässigbar gering.

In Fig. 3 sind auch die Positionen der weiteren Andruckelemente 13 dargestellt. Die weiteren Andruckelemente 13 setzen auf der Wandstruktur 21.3 auf. Dadurch wird der äußere Kontaktbereich 21.1 beidseitig der durch diesen verlaufenden Schweißnaht 23 angedrückt.

Durch die geringe Abschattung der zweiten Andruckelemente 12 ist es auch möglich, die Werkstückteile 21, 22 in unmittelbarer Nähe zur Wandstruktur 21.3 anzudrücken und gleichzeitig die Schweißnaht 23 sehr nah an die Wandstrukturen 21.3 heranzuführen

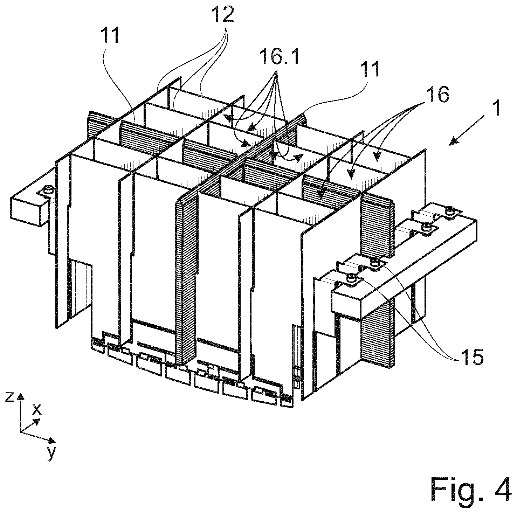

In einem anderen, in Fig. 4 dargestellten Ausführungsbeispiel ist die Andruckeinheit 1 ohne den Tragrahmen 17 aufgebaut. Die Andruckelemente 11, 12 bilden dazu eine selbsttragende Struktur aus. Dazu bestehen die ersten Andruckelemente 11 aus Blechen mit einer vergleichsweise großen Blechdicke. Im Gegensatz zum ersten Ausführungsbeispiel werden hier nur zwei erste Andruckelemente 11 verwendet, die sich mittig kreuzend ineinander gesteckt sind. An den ersten Andruckelementen 11 sind alle weiteren Bestandteile der Andruckeinheit 1 befestigt. Die zweiten Andruckelemente 12 werden jeweils in ihrer Mitte an den ersten Andruckelementen 11 aufgenommen. Außerhalb der Mitte kreuzen sie sich mit den in der jeweils anderen Orientierungsrichtung angeordneten zweiten Andruckelementen 12. Die zweiten Andruckelemente 12 sind gleichmäßig über die in x- oder y-Richtung ausgedehnten ersten Andruckelemente 11 verteilt und bilden die gitterförmige Anordnung. Die in y-Richtung orientierten zweiten Andruckelemente 12 werden an ihren seitlichen Enden an der Justiereinrichtung 15 aufgenommen, die wiederum an den ersten Andruckelementen 11 befestigt ist. Eine solche Anordnung ist leichter und noch kostengünstiger herzustellen und eignet sich insbesondere für transluzente Werkstückteile 21, die keine in z-Richtung orientierten Wandstrukturen 21.3 aufweisen.

In anderen Ausführungen der Vorrichtung ist es auch möglich, die Andruckkraft F mit der Andruckeinheit 1 einzuleiten, welche die Werkstückteile 21, 22 gegen die Aufnahme 4 andrückt. Dazu steht die Andruckeinheit 1 mit dem Druckzylinder 5 in Verbindung und die Aufnahme 4 ist starr in der Vorrichtung aufgenommen.

Die Aufnahme 4 kann eine druckelastisch nachgiebige Auflagefläche zur Aufnahme des absorbierenden Werkstückteils 22 aufweisen. Die druckelastisch nachgiebige Auflagefläche unterstützt die gleichmäßige Verteilung der Andruckkraft F, indem sie einer punktuell zu hohen Andruckkraft F nachgeben kann. Die druckelastisch nachgiebige Auflagefläche ist im einfachsten Fall eine flexible, mattenförmige Unterlage oder eine Beschichtung der Auflagefläche der Aufnahme 4.

Es ist auch möglich, die Vorrichtung so zu gestalten, dass die Relativbewegung zwischen Werkstück 2 und Laserstrahlquelle 3 durch eine Bewegung der Andruckeinheit 1 zusammen mit der Aufnahme 4 erfolgt. Dazu wird mittels der Bewegungseinrichtung 6 die Andruckeinheit 1 und die Aufnahme 4 gegenüber einer unbewegten Laserstrahlquelle 3 in y-Richtung bewegt.

Es ist genauso möglich, für die Relativbewegung einen mittels Scanner bewegten Laserstrahl zu verwenden. Das Verschweißen der Werkstückteile 21, 22 erfolgt dann durch eine Abtastbewegung mit dem Laserstrahl.

Analog zum Scanner kann auch mit der Laserstrahlung 31 eines einzelnen Laserstrahlemitters geschweißt werden, mit dem eine mehrfach versetzte Relativbewegung gegenüber dem Werkstück 2 ausgeführt wird.

Insbesondere für kleinere Werkstücke 2 macht die Verwendung eines Flächenstrahlers als Laserstrahlquelle 3 Sinn, mit dem der Kontaktbereich der Werkstückteile 21, 22 vollständig abgedeckt wird. Dadurch kann vollständig auf die Bewegungseinrichtung 6 verzichtet werden.

Gegenüber einer rechtwinkligen, gitterförmigen Anordnung der Andruckelemente 11, 12 in x-y-Richtung kann diese auch unter einem Winkel verschieden von 90° angeordnet sein. Eine derart verschränkte Anordnung kann unter Umständen eine bessere Anpassung der Andruckeinheit 1 an die Gegebenheiten des Werkstücks 2 ermöglichen.

Genauso ist es möglich, von der rechteckigen Grundform der Andruckeinheit 1 abzuweichen, indem die Andruckeinheit 1 und der Tragrahmen 17 beispielsweise kreisförmig gestaltet sind.

Um die Homogenisierung der Laserstrahlung 31 zu verbessern, kann die senkrecht auf das Werkstück 2 gerichtete Laserstrahlquelle 3 auch geringfügig angewinkelt werden. Eine Anwinklung um bis zu 10° aus der Senkrechten führt dazu, dass sich der Anteil der an den Kanalwänden 16.1 reflektierten Laserstrahlung 31 erhöht. Dadurch kommt es zu einer verstärkten Durchmischung der Laserstrahlung 31 und damit zu einer homogeneren Schweißnaht 23.

### Bezugszeichenliste

- 1: Andruckeinheit
- 11: erstes Andruckelement
- 12: zweites Andruckelement
- 12.1: Ausnehmung
- 12.2: federnde Struktur
- 12.3: Einschnitt
- 12.4: Andruckstück
- 13: weiteres Andruckelement
- 14: Schlitz
- 15: Justiereinrichtung
- 16: Kanal
- 16.1: Kanalwand
- 17: Tragrahmen
- 2: Werkstück
- 21: transluzentes Werkstückteil
- 21.1: äußerer Kontaktbereich
- 21.2: innerer Kontaktbereich
- 21.3: Wandstruktur
- 22: absorbierendes Werkstückteil
- 23: Schweißnaht
- 24: Schweißnahtmuster
- 3: Laserstrahlquelle
- 31: Laserstrahlung
- 32: Abstrahlrichtung
- 4: Aufnahme
- 5: Druckzylinder
- 6: Bewegungseinrichtung
- 7: Speicher- und Steuereinheit
- F: Andruckkraft

## Patentansprüche

1. Vorrichtung zum Verbinden zweier Werkstückteile (21, 22) mittels Laser-Durchstrahlschweißen über ein vorgegebenes Schweißnahtmuster (24) aus einer Vielzahl von Schweißnähten (23),
mit einer Aufnahme (4), die dazu ausgelegt ist, zwei in x-y-Richtung ausgedehnte Werkstückteile (21, 22) zueinander in x-, y- und z-Richtung eines kartesischen Koordinatensystems zu positionieren,
mit einer mit ihrer Abstrahlrichtung (32) in z-Richtung auf die Aufnahme (4) und damit auf die in dieser positionierten Werkstückteile (21 , 22) gerichteten und die Vorrichtung in x-Richtung überspannenden Laserstrahlquelle (3),
mit einer Bewegungseinrichtung (6) zum relativen Bewegen der Laserstrahlquelle (3) zur Aufnahme (4) in y-Richtung,
mit einer Andruckeinheit (1), die der Laserstrahlquelle (3) in der Abstrahlrichtung (32) nachgeordnet und in z-Richtung relativ auf die Aufnahme (4) zustellbar ist, in der mehrere in der Abstrahlrichtung (32) durch die Andruckeinheit (1) hindurch verlaufende Kanäle (16) vorgesehen sind, die sich gegenüberstehende Kanalwände (16.1) aufweisen, an denen wenigstens ein Teil der auf die Werkstückteile (21, 22) gerichteten Laserstrahlung (31) vor dem Auftreffen auf den Werkstückteilen (21, 22) reflektiert wird und die dazu ausgelegt sind, die Werkstückteile (21, 22) in z-Richtung gegeneinander anzudrücken,
sowie mit einer Speicher- und Steuereinheit (7),
**dadurch gekennzeichnet,**
**dass** die Kanalwände (16.1) durch eine gitterförmige Anordnung von in x- und y- Richtung orientierten planplattenförmigen ersten und zweiten Andruckelementen (11, 12) gebildet sind, wobei von den ersten Andruckelementen (11) wenigstens eines in x- und eines in y-Richtung orientiert angeordnet ist und in z-Richtung starr ist, und eine Vielzahl von zweiten Andruckelementen (12) sich orientierungsabhängig in verkürzte zweite Andruckelemente (12), die nicht zur Anlage an die Werkstückteile (21, 22) kommen, und elastische zweite Andruckelemente (12), die integrierte Mittel zum Ausgleich von Toleranzen in z-Richtung aufweisen, unterscheiden.

2. Vorrichtung zum Verbinden zweier Werkstückteile (21, 22) nach Anspruch 1, **dadurch gekennzeichnet, dass**
die ersten und zweiten Andruckelemente (11, 12) jeweils mehrere Schlitze (14) aufweisen, über die die ersten und zweiten Andruckelemente (11, 12), die gitterförmige Anordnung bildend, ineinander gesteckt sind.

3. Vorrichtung zum Verbinden zweier Werkstückteile (21, 22) nach Anspruch 1, **dadurch gekennzeichnet, dass**
die zweiten Andruckelemente (12) mit den integrierten Mitteln zum Ausgleich von Toleranzen jeweils einen monolithischen Aufbau aufweisen.

4. Vorrichtung zum Verbinden zweier Werkstückteile (21, 22) nach Anspruch 3, **dadurch gekennzeichnet, dass**
das integrierte Mittel zum Ausgleich von Toleranzen eine in die zweiten Andruckelemente (12) eingebrachte federnde Struktur (12.2) ist, die an auf den Werkstückteilen (21, 22) aufsetzenden Kanten der zweiten Andruckelemente (12) angeordnet ist.

5. Vorrichtung zum Verbinden zweier Werkstückteile (21, 22) nach Anspruch 4, **dadurch gekennzeichnet, dass**
die federnde Struktur (12.2) einen Aufbau aufweist, der eine in die zweiten Andruckelemente (12) eingeleitete Andruckkraft (F) gleichmäßig auf eine Vielzahl von Kraftaufnahmepunkten verteilt.

6. Vorrichtung zum Verbinden zweier Werkstückteile (21, 22) nach Anspruch 5, **dadurch gekennzeichnet, dass**
die federnde Struktur (12.2) die Andruckkraft (F), von einem mittigen Kraftaufnahmepunkt ausgehend, symmetrisch auf eine sich mehrfach kaskadenartig verdoppelnde Anzahl von Kraftaufnahmepunkten verteilt.

7. Vorrichtung zum Verbinden zweier Werkstückteile (21, 22) nach Anspruch 1, **dadurch gekennzeichnet, dass**
die Andruckeinheit (1) einen in x-y-Richtung ausgedehnten Tragrahmen (17) aufweist, an dem die ersten und zweiten Andruckelemente (11, 12) befestigt sind, und
der Tragrahmen (17) eine Justiereinrichtung (15) zur Justage der zweiten Andruckelemente (12) gegenüber den ersten Andruckelementen (11) aufweist.

8. Vorrichtung zum Verbinden zweier Werkstückteile (21, 22) nach Anspruch 1, **dadurch gekennzeichnet, dass**,
an den ersten oder zweiten Andruckelementen (11, 12) angeordnet weitere Andruckelemente (13) zum Aufnehmen der Anruckkraft (F) vorgesehen sind.

9. Vorrichtung zum Verbinden zweier Werkstückteile (21, 22) nach Anspruch 1, **dadurch gekennzeichnet, dass**
die Aufnahme (4) eine druckelastisch nachgiebige Auflagefläche zum Auflegen des absorbierenden Werkstückteils (22) aufweist.

10. Vorrichtung zum Verbinden zweier Werkstückteile (21, 22) nach Anspruch 1, **dadurch gekennzeichnet, dass**
die Andruckelemente (11, 12) eine den Tragrahmen (17) ersetzende und die Ausbildung einer selbsttragenden Struktur gestattende Dimensionierung aufweisen.

## Claims

1. A device for connecting two workpieces (21, 22) by means of laser transmission welding via a given weld pattern (24) consisting of a plurality of weld seams (23), said device comprising:
a receptacle (4), which is configured to position two workpieces (21, 22) with respect to each other in the x, y and z directions of a Cartesian coordinate system, said workpieces (21, 22) extending in x-y direction;
a laser beam source (3), which is directed with its beam direction (32) in the z-direction onto the receptacle (4) and thus onto the workpieces (21, 22) positioned therein and which extends over the device in the x-direction;
a movement device (6) for moving the laser beam source (3) with respect to the receptacle (4) in the y-direction;
a contact pressure unit (1) arranged downstream of the laser beam source (3) in the beam direction (32) and relatively movable towards the receptacle (4) in the z-direction, having several channels (16) provided therein which pass through the contact pressure unit (1) in the beam direction (32) and comprise opposing channel walls (16.1) which reflect at least part of the laser beam (31) directed onto the workpieces (21, 22) before it impinges on the workpieces (21, 22) and which are configured to press the workpieces (21, 22) against each other in the z-direction;
as well as a storage and control unit (7),
**characterised in that**
the channel walls (16.1) are formed by a grid-like arrangement of planar plate-shaped first and second pressure elements (11, 12) oriented in the x- and y-directions, wherein at least one of said first pressure elements (11) is oriented in the x-direction and one is oriented in the y-direction and is rigid in the z-direction, and a plurality of second pressure elements (12) differentiate, according to their orientation, into shortened second pressure elements (12), which do not contact the workpieces (21, 22), and elastic second pressure elements (12), which comprise integrated means for compensating for tolerances in the z-direction.

2. The device for connecting two workpieces (21, 22) according to claim 1, **characterised in that** the first and second pressure elements (11, 12) each comprise several slots (14) through which the first and second pressure elements (11, 12), forming the grid-shaped arrangement, are inserted into each other.

3. The device for connecting two workpieces (21, 22) according to claim 1, **characterised in that** the second pressure elements (12) with the integrated means for compensating for tolerances respectively are of monolithic construction.

4. The device for connecting two workpieces (21, 22) according to claim 3, **characterised in that** the integrated means for compensating for tolerances is a resilient structure (12.2) introduced into the second pressure elements (12) and arranged on edges of the second pressure elements (12) which come to lie on the workpieces (21, 22).

5. The device for connecting two workpieces (21, 22) according to claim 4, **characterised in that** the resilient structure (12.2) is of a construction which uniformly distributes a contact pressure force (F), introduced into the second pressure elements (12), among a plurality of force application points.

6. The device for connecting two workpieces (21, 22) according to claim 5, **characterised in that** the resilient structure (12.2) distributes the contact pressure force (F) symmetrically, starting from a central force application point, among a number of force application points which doubles several times in a cascade-like manner.

7. The device for connecting two workpieces (21, 22) according to claim 1, **characterised in that** the contact pressure unit (1) comprises a support frame (17) extending in the x-y direction, to which the first and second pressure elements (11, 12) are fixed, said support frame (17) comprising an adjusting means (15) for adjusting the second pressure elements (12) with respect to the first pressure elements (11).

8. The device for connecting two workpieces (21, 22) according to claim 1, **characterised in that** further pressure elements (13), arranged on the first or second pressure elements (11, 12), are provided to receive the contact pressure force (F).

9. The device for connecting two workpieces (21, 22) according to claim 1, **characterised in that** the receptacle (4) comprises a support surface, which is elastically deformable by pressure, for supporting the absorbing workpiece (22) thereon.

10. The device for connecting two workpieces (21, 22) according to claim 1, **characterised in that** the pressure elements (11, 12) are dimensioned so as to allow replacement of the support frame (17) and formation of a self-supporting structure.

## Revendications

1. Dispositif destiné à relier deux pièces (21, 22) par soudage au laser de transmission selon un motif de soudure donné (24) constitué d'une pluralité de soudures (23), ledit dispositif comportant :
un logement (4) destiné à positionner deux pièces (21, 22), l'un par rapport à l'autre, en direction de x, y et z d'un système de coordonnées cartésiennes, lesdites pièces (21, 22) s'étendant en direction x-y ;
une source de rayonnement laser (3), qui est dirigée, avec son direction de rayonnement (32) en direction de z, sur le logement (4) et ainsi sur les pièces (21, 22) positionnées dans celui-ci ;
un dispositif de déplacement (6) pour déplacer la source de rayonnement laser (3) en direction de y par rapport au logement (4) ;
une unité de pression (1), qui est disposée en aval de la source de rayonnement laser (3) dans la direction de rayonnement (32) et qui est déplaçable en mouvement relatif vers le logement (4) en direction de z, présentant plusieurs canaux (16) qui traversent ladite unité de pression (1) dans la direction de rayonnement (32) et qui présentent des parois de canal (16.1) opposées sur lesquelles au moins une partie du rayonnement laser (31) dirigé sur les pièces (21, 22) est réfléchie avant de rencontrer les pièces (21, 22), et lesdites parois de canal (16.1) étant destinées à presser les pièces (21, 22) l'une contre l'autre en direction de z ;
et une unité de mémorisation et de commande (7),
**caractérisé en ce que**
les parois de canal (16.1) sont constituées par un arrangement en forme de grille de premiers et deuxièmes éléments presseurs (11, 12) en forme de plaques planaires, orientés en direction de x et de y, au moins un des premiers éléments presseurs (11) étant orienté en direction de x et un étant orienté en direction de y et étant rigide en direction de z, et **en ce qu'**une pluralité de deuxièmes éléments presseurs (12) se différencient selon leur orientation en des deuxièmes éléments presseurs (12) raccourcis, qui ne contactent pas les pièces (21, 22), et des deuxièmes éléments presseurs (12) élastiques qui présentent des moyens intégrés destinés à égaliser des tolérances.

2. Dispositif destiné à relier deux pièces (21, 22) selon la revendication 1, **caractérisé en ce que** les premiers et deuxièmes éléments presseurs (11, 12) présentent chacun plusieurs fentes (14) par lesquelles les premiers et deuxièmes éléments presseurs (11, 12) sont insérés l'un dans l'autre en constituant un arrangement en forme de grille.

3. Dispositif destiné à relier deux pièces (21, 22) selon la revendication 1, **caractérisé en ce que** les deuxièmes éléments presseurs (12) avec les moyens intégrés destinés à égaliser des tolérances présentent chacun une structure monolithique.

4. Dispositif destiné à relier deux pièces (21, 22) selon la revendication 3, **caractérisé en ce que** le moyen intégré destiné à égaliser des tolérances est une structure (12.2) élastique introduite dans les deuxièmes éléments presseurs (12) et disposée sur des bords des deuxièmes éléments presseurs (12) supportées par les pièces (21, 22).

5. Dispositif destiné à relier deux pièces (21, 22) selon la revendication 4, **caractérisé en ce que** la structure élastique (12.2) présente une construction qui distribue de manière uniforme, parmi une pluralité de points d'application de force, une force de pression (F) introduite dans les deuxièmes éléments presseurs (12).

6. Dispositif destiné à relier deux pièces (21, 22) selon la revendication 5, **caractérisé en ce que** la structure élastique (12.2) distribue la force de pression (F) symétriquement, à partir d'un point central d'application de force, parmi un nombre de points d'application de force doublant plusieurs fois en cascade.

7. Dispositif destiné à relier deux pièces (21, 22) selon la revendication 1, **caractérisé en ce que** l'unité de pression (1) présente un châssis de support (17) qui s'étend en direction x-y et sur lequel sont montés les premiers et deuxièmes éléments presseurs (11, 12), ledit châssis de support (17) présentant un dispositif de réglage (15) destiné à régler les deuxièmes éléments presseurs (12) par rapport aux premiers éléments presseurs (11).

8. Dispositif destiné à relier deux pièces (21, 22) selon la revendication 1, **caractérisé en ce que** des éléments presseurs additionnels (13) destinés à recevoir la force de pression (F) sont disposés sur les premiers ou deuxièmes éléments presseurs (11, 12).

9. Dispositif destiné à relier deux pièces (21, 22) selon la revendication 1, **caractérisé en ce que** le logement (4) présente une surface de support déformable élastiquement par pression et destinée à supporter la pièce absorbante (22).

10. Dispositif destiné à relier deux pièces (21, 22) selon la revendication 1, **caractérisé en ce que** les éléments presseurs (11, 12) sont dimensionnés de manière à permettre le remplacement du châssis de support (17) et la réalisation d'une structure autoportante.
